# EUROPÄISCHE PATENTSCHRIFT

(11) **EP 0 659 534 B1**
(45) Veröffentlichungstag und Bekanntmachung des Hinweises auf die Patenterteilung: **25.10.2000**
(21) Anmeldenummer: 94120601.3
(22) Anmeldetag: 23.12.1994
(51) Int. Cl.: B29C 47/00, F16L 11/12, F16L 9/133

(54) **Kühlflüssigkeitsleitung**
Coolant hose
Tuyau pour liquide de refroidissement

(30) Priorität: 23.12.1993 DE 9319879 U
(43) Veröffentlichungstag der Anmeldung: 28.06.1995
(73) Patentinhaber: EMS-INVENTA AG, 8001 Zürich (CH)
(72) Erfinder: Pfleger, Wolfgang, Dipl.-Ing., CH-7015 Tamins (CH)
(74) Vertreter: Becker Kurig Straus

(56) Entgegenhaltungen:
- EP-A- 0 428 834
- EP-A- 0 436 923
- EP-A- 0 470 605
- DE-U- 9 203 865
- DATABASE WPI Section Ch, Week 9416 Derwent Publications Ltd., London, GB; Class A32, AN 94-124576 & JP-A-63 158 382 ( KINUGAWA RUBBER IND CO LTD) , 1.Juli 1988
- DATABASE WPI Section Ch, Week 9239 Derwent Publications Ltd., London, GB; Class A88, AN 92-320031 & JP-A-04 224 384 ( TOKAI RUBBER IND LTD) , 13.August 1992

## Beschreibung

Die Erfindung betrifft eine Kühlflüssigkeitsleitung aus mehreren Schichten aus thermoplastisch verarbeitbaren Polymeren nach dem Oberbegriff des Patentanspruchs 1. Eine derartige Kühlflüssigkeitsleitung ist bekannt; siehe z.B. EP-A-0436923.

Kühlflüssigkeitsleitungen haben in der Regel keine einfachen, sondern kompliziertere Geometrien und werden oft aus Metallteilen und elastischen Zwischenstücken zusammengesetzt, um die z.T. intensiven Vibrationen des Motors auszugleichen. Dafür werden gemäß Stand der Technik mit Fasergewebe verstärkte Gummileitungen eingesetzt. Solche bevorzugt für Fahrzeugmotoren eingesetzten Gummileitungen haben den Nachteil, daß sie einerseits relativ teuer sind und trotzdem nicht den Anforderungen, besonders bei im Motorraum entstehenden hohen Temperaturen, vollständig gewachsen sind. Nach einer Betriebsdauer, die ca. 100.000 Fahrkilometer entspricht, fallen die mechanischen Eigenschaften bereits stark ab. Noch kritischer wird die Stabilität von Kühlwassergummileitungen für zukünftige Automobilmotoren, die die Temperaturen im Motorraum noch weiter ansteigen lassen als bisher, wodurch der Abfall der mechanischen Eigenschaften zusätzlich beschleunigt wird.

Kühlwasserleitungen, bestehend aus einer einzigen Polymerschicht, sogenannte Monorohre, finden bisher nur begrenzte Einsatzmöglichkeiten. Leitungen aus Polyolefinen zeigen oberhalb 100 °C eine ungenügende Berstdruckfestigkeit. Die Hydrolysebeständigkeit ist bei Temperaturen von 100 °C ungenügend.

Aus diesem Grund wird bisher bevorzugt glasfaserverstärktes Polyamid für Teile eingesetzt, die direkt mit Kühlflüssigkeit in Kontakt kommen, da die Glasfasern den Verlust an mechanischen Eigenschaften, z.B. durch Quellung oder hydrolytischen Abbau teilweise kompensieren können. Glasfaserverstärkte Rohre sind jedoch nicht flexibel.

Aus JP-A-63-158382 ist eine ölresistene Luftleitung bekannt. In Fig. 2 wird ein dreischichtiges Rohr dargestellt, bei welchem in Längsrichtung durchgehend immer alle drei Schichten vorhanden sind und in keiner Schicht ein Materialwechsel vorkommt. Die mit 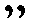 12" und 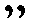 13" gekennzeichneten Rohrbereiche stellten Bereiche mit unterschiedlichen Dicken einzelner Schichten dar, aber keinen sequentiellen Materialwechsel innerhalb einer Schicht.

JP-A-04-224384 beschreibt eine mehrschichtige Benzinleitung. Als Benzin-Barriereschicht wird Polyester, bevorzugt Polyethylenterephthalt, vorgeschlagen.

DE-U-9 203 865 beschreibt einen Hochdruckschlauch für flüssige oder gasförmige Medien mit einem mehrlagigen, medienresistenten Innenteil, das ein durch Coextrusion hersgestelltes mehrlagiges Polyamidrohr sein kann. Als bevorzugte Verwendungen werden Hydraulik-Ölleitungen, Leitungen für Medien mit Aggregatzustandsändeningen, z. B. für Freon und Transportleitungen für Gase angegeben.

EP-A-0 470 605 beschreibt eine durch Coextrusion herstellbare, mehrschichtige Kraftstoffleitung. Durch die Verstärkung mindestens einer Schicht mit Glasfasern ist die die Flexibilität dieser Leitung limitiert.

EP-A-0 436 923 beschreibt eine gattungsgemäße Kühlflüssigkeitsleitung aus mehreren Schichten aus thermoplastisch verarbeitbaren Polymeren. Diese Polymere sind, zumindest an ihren Berührungsflächen, miteinander verträglich. Die auf der Innnenseite liegende Schicht besteht aus einem gegenüber dem Kühlmittel inerten, nicht quellbaren Material, insbesondere aus halogenierten oder nicht halogenierten Homo- oder Copolyolefinen, aus Mischungen oder Blends derselben. Diese Homo- oder Copolyolefine können funktionelle, in der äußeren Schicht verträglich machende Gruppen aufweisen. Die äußere Schicht kann aus Polyamid 6 bestehen. Weiterhin kann eine zwischen der äußeren und der inneren Schicht angeordente Zwischenschicht vorgesehen sein, die durch Pfropfung oder Copolymerisation mit fünktionellen Gruppen ausgestattet ist. Betont werden muß, daß es sich bei der Kühlflüssigkeitsleitung gemäß EP-A-0 436 923 um eine durch übliche, durch Coextrusion hergestellte Leitung handelt. Coextrusion im üblichen Sinn bedeutet gleichzeitige, ununterbrochene, parallele Extrusion von mindestens zwei Materialien, so daß sich ein Rohr mit coaxial ineinander angeordneten Schichten ergibt.

Durch Coextrusion hergestellte rohrförmige, flexible Mehrschicht-Kühlflüssigkeitsleitungen nach der EP-0 436 923 haben trotz ihrer gewellten Wandung nur beschränkte Einsatzmöglichkeiten, da ihre Verwendung durch die gewählte Polymerkombination limitiert ist.

Es ist daher Aufgabe der Erfindung Kühlflüssigkeitsleitungen zu schaffen, die die genannten Nachteile nicht aufweisen.

Diese Aufgabe wird gelöst durch die Kühlflüssigkeitsleitung gemäß Anspruch 1. Sie wird speziell durch Leitungen gelöst, deren funktionelle Schichten abschnittsweise aus an ihre Funktion angepaßten Polymeren bestehen. Zweckmäßige Weiterbildungen der Erfindung sind in den abhängigen Ansprüchen beschrieben.

Für den Einsatz als Kühlflüssigkeitsleitungen für Motoren, speziell Fahrzeugmotoren eignen sich darüber hinaus besonders Leitungen mit zumindest auf Teilstücken ringförmig oder spiralig gewellter Wandung.

Es wurde festgestellt, daß überraschenderweise sich Mehrschichtleitungen mit einer Kombination von unterschiedlich wirksamen Schichten aus geeigneten Polymeren, z.B. mit einer für Kühlmittel inerten, nicht quellbaren Innenschicht und einer steifen, tragenden, besonders berstdruckfesten Außenschicht, in besonderer Weise eignen. Diese Schichten müssen miteinander verträglich oder durch eine mit den beiden Schichten verträgliche Zwischenschicht verbunden sein. Solche erfindungsgemäßen Leitungen sind bevorzugt nach der sequentiellen Coextrusion ihrer Schichten aus den verschiedenen Polymeren, in bekannter Weise mit einer Wellung ihrer mehrschichtigen Wandung versehen worden.

Besonders bevorzugt sind Mehrschichtleitungen mit polyolefinischer Innenschicht und Polyamid als Außenschicht. Durch die polyolefinische im Kühlmittel nicht quellbare Innenschicht wird eine hervorragende Hydrolysebeständigkeit gewährleistet. Polyamid in der Außenschicht gewährleistet eine hohe Berstdruckbeständigkeit und läßt die von den Automobil-Herstellern geforderten Werte erreichen, so daß die für Kühlflüssigkeitsleitungen aus Gummi unumgängliche textile Verstärkung entfallen kann.

Die erfindungsgemäßen Leitungen zeichnen sich dadurch aus, daß ihre Schichten aus Polymeren mit unterschiedlicher Flexibilität bestehen, und daß die Flexibilität der Leitung durch abschnittsweise unterschiedliche Polymere für diese variierbar ist.

Die erfindungsgemäßen Leitungen sind wesentlich flexibler als die verstärkten Gummileitungen nach dem Stand der Technik. Erfahrungsgemäß führt das Verbiegen von glatten Rohren aus festen polymeren Materialien bei größeren Durchmessern zum Verknicken.

Eine besonders vorteilhafte Flexibilität, die sich aus der Notwendigkeit ergibt, auf engem Raum starke Leitungs-Krümmungen zu ermöglichen, zeigen Leitungen deren Wandung zumindest teilweise durch nach dem Stand der Technik bekannten Verfahren z.B. ringförmig oder spiralig gewellt wurde, wobei diese Leitungen im Bereich der Wellungen beispielsweise aus flexibleren Polymeren bestehen, als im ungewellten Bereich.

Zusätzliche Vorteile solcher erfindungsgemäßen Leitungen sind nicht nur das geringere Gewicht, sondern auch die geringeren Herstellungskosten.

Berstdruckfeste Materialien für die Außenschicht sind besonders Polyamide, bevorzugt Homo- oder Copolyamide aus linearen aliphatischen Monomeren mit 6 bis 12 C-Atomen, z.B. aus Lactamen, Aminocarbonsäuren oder Diaminen und Dicarbonsäuren, oder solche aus aromatischen Monomeren mit 6 bis 12 C-Atomen, z.B. alkylierte oder nicht alkylierte aromatische Diamine oder Dicarbonsäuren oder solche aus cycloaliphatischen Monomeren, wie z.B. alkylierte Diamine oder Dicarbonsäuren mit 6 bis 20 C-Atomen mit einem oder mehreren Cyclohexan-Ringen, die ihrerseits über Alkylengruppen verbunden sein können. Beispielhaft genannt seien die semikristallinen Polyamide der Reihen PA6 bis PA 12 und der Reihen PA 6,6 bis PA 6,12 sowie PA 12,6 bis 12,12. Es eignen sich auch Mischungen und Blends der genannten Polyamide, wobei Qualitäten mit hohen Viskositäten bevorzugt sind.

Inerte, quellungsbeständige Polymere für die Innenschicht sind halogenierte oder nicht halogenierte Homo- oder Copolyolefine, deren Mischungen oder Blends. Bevorzugt sind neben Homopolyolefinen die Copolyolefine des Ethylen bzw. Propylen mit weiteren α-Olefinen. Geeignet sind chlorierte, besonderes auch fluorierte Polyolefine und Copolyolefine und auch Polyvinylchlorid. Von besonderem Vorteil sind auch Blends aus Polyolefinen und vernetzten oder teilvernetzten Elastomeren. Für zweischichtige Leitungen müssen die Homo-oder Copolyolefine selbst reaktive, verträglich machende Gruppen tragen, wie sie z.B. durch Pfropfung mit α-ungesättigten Säuren bzw. ihren Derivaten oder durch geeignete Comonomere wie z. B. Acryl- oder Methacrylsäuren oder deren Derivate zu erzielen sind.

Die innere Schicht kann vorzugsweise aus Polymeren der Gruppe ETFE, PTFE, PVDF, PPS, PPE, POM, EVOH, PBT, EVA und deren Blends bestehen.

Die innere Schicht kann aber auch mit der Außenschicht durch eine mit beiden verträgliche Zwischenschicht genügend fest verbunden werden. Auch dafür eignen sich dafür in besonderem Maße Polyolefine oder Copolyolefine, die reaktionsfähige Gruppen, besonders Carboxyl- oder Säurehydridgruppen durch Pfropfung oder durch die genannten Comonomeren erhalten haben.

Der Anteil der bestdruckfesten Außenschicht beträgt 10 bis 95 %, bevorzugt 25 % bis 95 % der Gesamtwandstärke.

Eine ganz besonders bevorzugte Ausführungsform der erfindungsgemäßen Kühlflüssigkeitsleitung besteht aus einer Innenschicht aus Maleinsäure-gepfropftem Polyolefin oder Copolyolefin und einer Außenschicht aus hochviskosem Polyamid 6 oder Polyamid 12 im glatten Teil und aus einem in seiner Flexibilität modifizierten Copolymeren oder Blend dieser Polyamid-Typen in der Außenschicht des gewellten Teils.

Die erfindungsgemäßen Kühlflüssigkeitsleitungen zeigen bei beliebiger Formgebung durch Kombination von geeignetem flexiblen Material für die Innenschicht und steifem Material alle Variationen der Flexibilität oder der Berstdruckfestigkeit, die darüber hinaus abschnittsweise gezielt unterschiedliche Werte haben können. Die Flexibilität kann in den gewellten Bereichen somit erheblich verbessert sein.

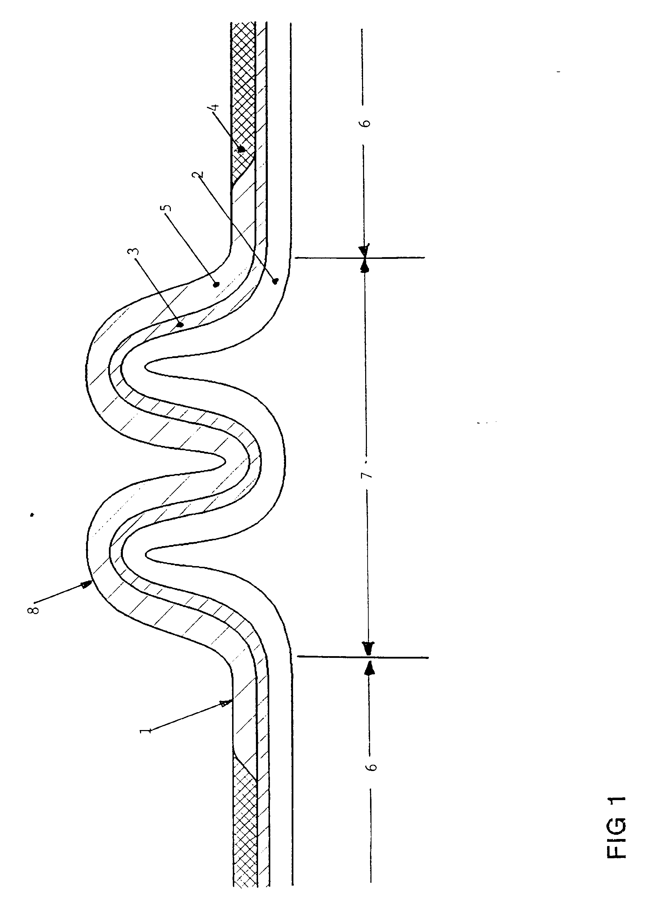

Die Erfindung wird im folgenden anhand der
- Figur 1: Längsschnitt durch eine dreischichtig gewellte Kühlflüssigkeitsleitung
beispielsweise beschrieben. Diese zeigt die Kühlflüssigkeitsleitung (1) mit einer flexiblen lösungsmittelinerten Innenschicht (2), einer Haftvermittlerschicht (3), einer berstdruckbeständigen Außenschicht aus einem ersten Polymer (4), und aus einem zweiten Polymer (5) sowie einem steifen Bereich (6), und einem flexiblen Bereich (7) mit Wellung (8).

In einer bevorzugten Ausführung ist die Außenschicht im ungewellten steifen Bereich der Kühlflüssigkeitsleitung ein Polyamid 12, das die erforderliche Steifigkeit und zugleich die entsprechende Berstdruckfestigkeit hat. Die Innenschicht ist ein sehr flexibles und gegen Frostschutzmittel inertes Polymer, bevorzugt ein Polyolefin. Im gewellten Bereich besteht die Außenschicht aus einem elastomeren PA 12-Copolymeren, z. B. auf der Basis von Lactam 12 / Polyetherpolyamid.

In einer weiteren Ausführungsform der Erfindung besteht die Außenschicht im ungewellten steifen Bereich aus glasfaserverstärktem PA 12 und im flexiblen Bereich aus PA 12.

Das Wanddickenverhältnis und die Polymeren der Innen- bzw. Außenschicht definieren die Flexibilität. In einem flexibleren Bereich, der für die Wellung vorgesehen ist, hat die erfindungsgemäße Leitung eine Außenschicht aus einem flexibleren druckbeständigeren anderen Polymer. Dabei kann auch das Schichtdickenverhältnis geändert sein.

Die Wellung ergibt eine gezielt große Flexibilität und die Möglichkeit, das Rohr um enge Radien zu biegen. Dabei wird die Berstdruckbeständigkeit durch den Well-Bereich vorgegeben.

Der Vorteil der erfindungsgemäßen Kühlflüssigkeitsleitungen liegt darin, daß sehr steife Bereiche und flexiblere Bereiche abwechseln, die die Vibrationen zwischen Motor und Karossierie auffangen können.

Die Erfindung ist keineswegs auf die vorgenannten Kühlflüssigkeitsleitungen beschränkt, sondern eignet sich gleichwohl für andere Medien führende Leitungen, wie Leitungen in Kraftstoffsystemen von Land- und Wasserfahrzeugen. Besonders bevorzugt sind hier Einfüllstutzen.

## Patentansprüche

1. Kühlflüssigkeitsleitung (1) aus mehreren Schichten aus thermoplastisch verarbeitbaren Polymeren, die zumindest auf einem Teilstück (7) eine ring- oder spiralförmig gewellte Wandung (8) aufweist und zumindest aus einer inneren, gegenüber dem Kühlmittel inerten, nicht quellbaren Schicht (2), bestehend aus halogenierten oder nicht halogenierten Homo- oder Copolyolefinen oder Mischungen oder Blends derselben, und einer äußeren berstdruckfesten Schicht (4; 5), bestehend aus einem Homo- oder Copolyamid oder Mischungen oder Blends derselben, besteht, wobei entweder die Innenschicht (2) durch Pfropfung mit α-ungesättigten Säuren bzw. deren Derivaten oder durch Copolymerisation mit Acryl- oder Methacrylsäuren reaktive, verträglich machende Gruppen ausgestattet ist oder zwischen der inneren und äußeren Schicht eine mit diesen beiden Schichten verträgliche Zwischenschicht (3) angeordnet ist, die aus Polyolefin oder Copolyolefin besteht, welches durch Pfropfung von α-ungesättigten Säuren bzw. ihren Derivaten oder durch Copolymerisation mit Acryl- oder Metacrylsäuren reaktionsfähige Gruppen aufweist, dadurch gekennzeichnet, daß die Kühlflüssigkeitsleitung (1) durch sequentielle Coextrusion hergestellt ist und einzelne Schichten abschnittsweise aus unterschiedlichen Polymeren bestehen.

2. Kühlflüssigkeitsleitung gemäß Anspruch 1, dadurch gekennzeichnet, daß die Homo- oder Copolyamide der äußeren Schicht (4; 5) aus linearen aliphatischen Monomeren mit 6 bis 12 C-Atomen, aus aromatischen Monomeren mit 6 bis 12 C-Atomen oder aus cycloaliphatischen Monomeren mit 6 bis 20 C-Atomen bestehen.

3. Kühlflüssigkeitsleitung gemäß Anspruch 1 oder 2, dadurch gekennzeichnet, daß die Polyamide der verschiedenen Abschnitte der äußeren Schicht (4; 5) mit Glasfasern verstärkt sein können.

4. Kühlflüssigkeitsleitung gemäß einem der vorhergehenden Ansprüche, dadurch gekennzeichnet, daß die äußere Schicht (4; 5) aus Polyamid-6 und die innere Schicht (2) aus einem Polyolefin oder Copolyolefin mit aufgepfropften α-ungesättigten Dicarbonsäuren oder deren Derivate besteht.

5. Kühlflüssigkeitsleitung gemäß einem der vorhergehenden Ansprüche, bei der die innere Schicht aus halogenierten oder nicht halogenierten Homo- oder Copolyolefinen, aus Mischungen oder Blends derselben besteht, die mit der äußeren Schicht nicht verträglich sind.

6. Kühlflüssigkeitsleitung gemäß einem der vorhergehenden Ansprüche, dadurch gekennzeichnet, daß die innere Schicht (2) aus chlorierten oder fluorierten Homo- oder Copolyolefinen oder aus PVC oder aus Blends oder Polymeren der Innen- und Außenschicht besteht.

7. Kühlflüssigkeitsleitung gemäß einem der vorhergehenden Ansprüche, dadurch gekennzeichnet, daß die innere Schicht (2) aus Polymeren der Gruppe ETFE, PTFE, PVDF, PPS, PPE, POM, EVOH , EVA, PBT und deren Blends besteht.

8. Kühlflüssigkeitsleitung gemäß einem der vorhergehenden Ansprüche, dadurch gekennzeichnet, daß die Wandstärke der äußeren berstdruckfesten Schicht (4; 5) 10% bis 95%, bevorzugt 25% bis 95%, der Gesamtwandstärke ausmacht.

9. Kühlflüssigkeitsleitung gemäß einem der vorhergehenden Ansprüche, dadurch gekennzeichnet, daß sie aus einer Innenschicht (2) aus Maleinsäuregepfropftem Polyolefin oder Copolyolefin und einer Außenschicht (4; 5) mit hochviskosem Polyamid-6 oder Polyamid-12 im glatten Teil (6) und aus einem in seiner Flexibilität modifizierten Copolymer oder Blend dieser Polyamidtypen in der Außenschicht des gewellten Teils (7) besteht.

10. Kühlflüssigkeitsleitung gemäß einem der vorhergehenden Ansprüche, dadurch gekennzeichnet, daß sie aus einer Innenschicht (2) aus Polyolefin, Copolyolefin oder polyolefinischem Blend und einer Außenschicht (4; 5) mit hochviskosem Polyamid-12 im glatten, steifen Teil (6) und aus Polyamid-12 Elastomer im flexiblen, gewellten Teil (7) der Außenschicht besteht.

11. Kühlflüssigkeitsleitung gemäß einem der vorhergehenden Ansprüche, dadurch gekennzeichnet, daß sie aus einer Innenschicht (2) aus Polyolefin, Copolyolefin oder polyolefinischem Blend und einer Außenschicht (4; 5) mit glasfaserverstärktem Polyamid-12 im ungewellten, steifen Bereich (6) und aus Polyamid-12 im flexiblen, gewellten Bereich (7) der Außenschicht besteht.

## Claims

1. Coolant hose (1), comprising a plurality of layers formed from thermoplastically processable polymers, which hose has an annularly or a helically undulatory wall (8) on at least one portion (7) and comprises at least one inner non-swellable layer (2), which is inert relative to the cooling agent and comprises halogenated or non-halogenated homo- or copolyolefines or mixtures or blends thereof, and one outer burst-proof layer (4; 5), which comprises a homo- or copolyamide or mixtures or blends thereof, either the inner layer (2) being provided with compatible-rendering groups, which are reactive by grafting with α-unsaturated acids or respectively derivatives thereof or by copolymerisation with acrylic or methacrylic acids, or an intermediate layer (3), which is compatible with these two layers, being disposed between the inner and outer layers, said intermediate layer comprising polyolefine or copolyolefine, which has groups capable of reaction by grafting α-unsaturated acids or respectively derivatives thereof or by copolymerisation with acrylic or methacrylic acids, characterised in that the coolant hose (1) is produced by sequential co-extrusion, and individual layers comprise various polymers in sections.

2. Coolant hose according to claim 1, characterised in that the homo- or copolyamides of the outer layer (4; 5) comprise linear aliphatic monomers having 6 to 12 C atoms, aromatic monomers having 6 to 12 C atoms or cycloaliphatic monomers having 6 to 20 C atoms.

3. Coolant hose according to claim 1 or 2, characterised in that the polyamides of the various sections of the outer layer (4; 5) may be reinforced with glass fibres.

4. Coolant hose according to one of the preceding claims, characterised in that the outer layer (4; 5) comprises polyamide-6, and the inner layer (2) comprises a polyolefine or copolyolefine having α-unsaturated dicarboxylic acids or derivatives thereof grafted thereon.

5. Coolant hose according to one of the preceding claims, in which the inner layer comprises halogenated or non-halogenated homo- or copolyolefines, or mixtures or blends thereof, which are not compatible with the outer layer.

6. Coolant hose according to one of the preceding claims, characterised in that the inner layer (2) comprises chlorinated or fluorinated homo- or copolyolefines or PVC or blends or polymers of the inner and outer layers.

7. Coolant hose according to one of the preceding claims, characterised in that the inner layer (2) comprises polymers of the ETFE, PTFE, PVDF, PPS, PPE, POM, EVOH, EVA, PBT group and blends thereof.

8. Coolant hose according to one of the preceding claims, characterised in that the wall thickness of the outer burst-proof layer (4; 5) is between 10 % and 95 %, preferably between 25 % and 95 %, of the total wall thickness.

9. Coolant hose according to one of the preceding claims, characterised in that it comprises an inner layer (2), which is formed from maleic acid-grafted polyolefine or copolyolefine, and an outer layer (4; 5), which has highly viscous polyamide-6 or polyamide-12 in the smooth pan (6) and comprises a copolymer or blend of these polyamide types, which is modified in respect of its flexibility, in the outer layer of the undulatory pan (7).

10. Coolant hose according to one of the preceding claims, characterised in that it comprises an inner layer (2), which is formed from polyolefine, copolyolefine or a polyolefinic blend, and an outer layer (4; 5), which has highly viscous polyamide-12 in the smooth, rigid part (6) and comprises polyamide-12 elastomer in the flexible, undulatory part (7) of the outer layer.

11. Coolant hose according to one of the preceding claims, characterised in that it comprises an inner layer (2), which is formed from polyolefine, copolyolefine or a polyolefinic blend, and an outer layer (4; 5), which has glass fibre-reinforced polyamide-12 in the non-undulatory, rigid region (6) and comprises polyamide-12 in the flexible, undulatory region (7) of the outer layer.

## Revendications

1. Tuyau (1) pour liquide de refroidissement fait de plusieurs couches de polymères thermoplastiques pouvant être façonnés, qui possède au moins au niveau d'un tronçon (7) une paroi (8) ondulée en forme d'anneau ou de spirale et qui est constitué du côté interne au moins par une couche (2) inerte vis-à-vis du milieu de refroidissement et non gonflante, elle-même constituée d'homo- ou de copolyoléfines halogénées ou non halogénées ou de mélanges ou produits de la fusion de ceux-ci, et du côté externe par une couche (4, 5) résistante à la pression d'éclatement, elle-même constituée d'un homo- ou d'un copolyamide ou de mélanges ou de produits de la fusion de ceux-ci, pour laquelle soit la couche interne (2) est pourvue de groupements promoteurs de compatibilité fixés par greffage d'acides α-insaturés ou de leurs dérivés ou par copolymérisation avec des acides acryl- ou méthacryliques réactifs, soit une couche intermédiaire (3) compatible avec la couche interne et la couche externe est intercalée entre lesdites couches internes et externes, cette couche intermédiaire étant elle-même constituée de polyoléfines ou de copolyoléfines possédant des groupements susceptibles de réagir fixés par greffage d'acides α-insaturés ou de leurs dérivés ou par copolymérisation avec des acides acryl- ou méthacryliques, caractérisé en ce que le tuyau (1) pour liquide de refroidissement est fabriqué par coextrusion séquentielle et en ce que les couches sont indépendamment et par tronçons constituées de polymères différents.

2. Tuyau pour liquide de refroidissement selon la revendication 1, caractérisé en ce que les homo- ou copolyamides de la couche (4, 5) externe sont constitués par des monomères linéaires aliphatiques ayant de 6 jusqu'à 12 atomes de carbone, des monomères linéaires aromatiques ayant de 6 jusqu'à 12 atomes de carbone ou de monomères linéaires cycloaliphatiques ayant de 6 jusqu'à 12 atomes de carbone.

3. Tuyau pour liquide de refroidissement selon la revendication 1 ou 2, caractérisé en ce que les polyamides des tronçons de la couche (4, 5) externe puissent être renforcés par de la fibre de verre.

4. Tuyau pour liquide de refroidissement selon l'une quelconque des revendications précédentes, caractérisé en ce que la couche (4, 5) externe est constituée de polyamide-6 et la couche interne (2) est constituée d'une polyoléfine ou copolyoléfine sur laquelle sont greffés des acides dicarboxyliques α-insaturés ou leurs dérivés.

5. Tuyau pour liquide de refroidissement selon l'une quelconque des revendications précédentes, pour lequel la couche interne est constituée d'homo- ou de copolyoléfines halogénées ou non ou de mélanges ou produits de la fusion de ceux-ci, ces homo- ou copolyoléfines n'étant pas compatibles avec la couche externe.

6. Tuyau pour liquide de refroidissement selon l'une quelconque des revendications précédentes, caractérisé en ce que la couche interne (2) est constituée d'homo- ou de copolyoléfines chlorées ou fluorées ou de PVC ou des produits de la fusion ou des polymères des couches internes et externes.

7. Tuyau pour liquide de refroidissement selon l'une quelconque des revendications précédentes, caractérisé en ce que la couche interne (2) est constituée de polymères issus du groupe des ETFE, PTFE, PVDF, PPS, PPE, POM, EVOH, PBT et leurs produits de fusion.

8. Tuyau pour liquide de refroidissement selon l'une quelconque des revendications précédentes, caractérisé en ce que la dureté de la paroi de la couche externe (4, 5) résistante à la pression d'éclatement représente de 10% jusqu'à 95%, et préférentiellement de 25% jusqu'à 95%, de la dureté de la paroi complète.

9. Tuyau pour liquide de refroidissement selon l'une quelconque des revendications précédentes, caractérisé en ce qu'il est constitué par une couche interne (2) , elle-même constituée de polyoléfine ou copolyoléfine greffée avec de l'acide malique, et par une couche externe (4, 5), elle-même constituée dans sa partie lisse (6) de polyamide -6 ou polyamide-12 à haute viscosité et dans sa partie ondulée de copolymère ou produit de fusion de ces types de polyamides modifiés au niveau de leur flexibilité.

10. Tuyau pour liquide de refroidissement selon l'une quelconque des revendications précédentes, caractérisé en ce qu'il est constitué par une couche interne (2), elle-même constituée de polyoléfine ou copolyoléfine ou produit de fusion de polyoléfines, et par une couche externe (4, 5), elle-même constituée dans sa partie lisse et rigide (6) de polyamide-12 à haute viscosité et dans sa partie ondulée et flexible (7) d'un élastomère de polyamide-12.

11. Tuyau pour liquide de refroidissement selon l'une quelconque des revendications précédentes, caractérisé en ce qu'il est constitué par une couche Interne (2), elle-même constituée de polyoléfine ou copolyoléfine ou produit de fusion de polyoléfines, et par une couche externe (4, 5), elle-même constituée dans son domaine non-ondulé et rigide (6) de polyamide-12 rigidifié par de la fibre de verre et dans son domaine ondulé et flexible (7) de polyamide-12.
